# EUROPÄISCHE PATENTSCHRIFT

(11) **EP 2 549 851 B1**
(45) Veröffentlichungstag und Bekanntmachung des Hinweises auf die Patenterteilung: **23.03.2016**
(21) Anmeldenummer: 10712333.3
(22) Anmeldetag: 25.03.2010
(51) Int. Cl.: A01G 3/025

(54) **HANDBETÄTIGTE SCHERE**
HAND-OPERATED SHEARS
CISAILLE ACTIONNÉE MANUELLEMENT

(43) Veröffentlichungstag der Anmeldung: 30.01.2013
(73) Patentinhaber: HUSQVARNA AB, 561 82 Huskvarna (SE)
(72) Erfinder: REH, Bernhard, 89150 Laichingen (DE)
(74) Vertreter: Finkele, Rolf
(86) Internationale Anmeldenummer: PCT/EP2010/001877
(87) Internationale Veröffentlichungsnummer: WO 2011/116790

(56) Entgegenhaltungen:
- DE-A1- 19 712 170
- FR-A- 1 511 708
- US-A- 3 273 240
- US-A- 5 511 314
- US-B2- 6 470 575

## Beschreibung

Die Erfindung betrifft eine handbetätigte Schere mit einem Ratschenmechanismus.

Scheren mit Ratschenmechanismen weisen den Vorteil auf, dass mit mäßiger Handkraft des Benutzers höhere Widerstandskräfte des zu schneidenden Schnittguts überwunden werden können als mit Scheren gleicher Handhebellänge ohne Ratschenmechanismus. Besonderes gebräuchlich ist eine Ausführung, bei welcher mit einem ersten Schwenkhebel, welcher eine erste Scherenachse und einen ersten Handhebel enthält, in einem ersten Gelenk ein zweiter Handhebel und in einem zweiten Gelenk ein zweiter Scherenhebel verbunden sind. Der zweite Scherenhebel enthält eine zweite Scherenbacke und einen Hebelfortsatz. Der Hebelfortsatz ist über einen. Ratschenhebel mit dem zweiten Handhebel verbunden, wobei ein erstes Ende des Ratschenhebels in einem dritten Gelenk gelagert und das zweite Ende des Ratschenhebels an einer Ratschenstruktur mit mehreren Ratschenstufen abgestützt ist. In einer ersten Ratschenstellung, in welche der Ratschenhebel nach maximaler Öffnungsstellung der Handhebel beim Schließen der Handhebel einrückt, können die Scherenbacken nicht vollständig geschlossen werden. Die Handhebel müssen nach Erreichen der Endstellung eines ersten Schließvorgangs der Handhebel wieder ein Stück weit geöffnet werden, wobei der Ratschenhebel unter Federeinwirkung zu einer der nächsten Ratschenstufen springt, in welchem in der Endstellung des Handhebel-Schließvorgangs ein weitergehendes oder vollständiges Schließen der Scherenbacken möglich ist. Eine Schere mit einem derartigen Ratschenmechanismus ist z. B. aus der DE 298 16 971 U1 oder US 5 511 314 A bekannt.

Die mehrfachen Schließvorgänge der Handhebel mit dazwischen vorzunehmendem teilweisem Öffnen sind auch erforderlich, wenn der Widerstand des Schnittguts auch in einem einzigen Schließvorgang der Handhebel, nachfolgend als Direktschnitt, durch die vom Benutzer auf die Handhebel aufbringbare Handkraft überwindbar wäre. In einem solchen Fall ist der mehrschrittige Schneidvorgang über den Ratschenmechanismus unnötig aufwendig.

Die GARDENA Comfort-Ratschenschere Smart Cut weist an dem zweiten Handgriff einen schwenkbaren Stützhebel auf, mit welchem bei einem Ratschenmechanismus der beschriebenen Art das der zweiten Scherenachse abgewandte Ende des Hebelfortsatzes des zweiten Scherenhebels gegen den zweiten Handhebel abstützbar ist, ohne dass der Ratschenhebel mit der Ratschenstruktur kraftübertragend wirksam wird, so dass ein Direktschnitt mit einem Kraftaufwand wie bei einer herkömmlichen Gartenschere durchführbar ist. Für stärkeres Schnittgut kann durch Wegschwenken des Stützhebels der Ratschenmechanismus zugeschaltet und ein Schnitt in mehreren Zügen durchgeführt werden.

In der US 6 470 575 B2 ist, um die Mehrfachbetätigung einer Ratschenschere zu vermeiden, vorgeschlagen, an dem Hebelfortsatz dem zweiten Handhebel zugewandt eine Steuerkurve auszubilden, welche bei dem als Direktschnitt durchgeführten Schließvorgang der Handhebel an zwei am zweiten Handhebel angeordneten Rollen geführt ist. Hierbei handelt es sich aber nur um einen Versuch, den Kraftaufwand über den Verlauf eines Schneidvorgangs bei einem Direktschnitt zu optimieren. Eine nach demselben Prinzip, aber mit einer Rolle am Hebelfortsatz und einer Steuerkurve am zweiten Handhebel, ist in der MD 3065 F1 beschrieben. Eine deutliche Reduzierung der erforderlichen Kraft durch einen mehrfachen Schließvorgang eines Ratschenmechanismus mit größerem kumuliertem Handhebelweg ist bei diesen Scheren mit Steuerkurve nicht möglich.

Aufgabe der vorliegenden Erfindung ist es, bei einer Gartenschere mit Ratschenmechanismus, insbesondere einer Astschere die Handhabung zu verbessern.

Die Erfindung ist im unabhängigen Anspruch beschrieben. Die abhängigen Ansprüche enthalten vorteilhafte Ausgestaltungen und Weiterbildungen der Erfindung.

Durch die Erfindung wird dem Benutzer die Wahlmöglichkeit gegeben, einen unter der Benutzung einer anfänglich eingenommenen Ratschenstellung des Ratschenmechanismus begonnenen Schneidvorgang bei Erreichen des dieser anfänglichen Ratschenstellung zugeordneten Endes der anfänglichen Schließbewegung entweder als für Ratschenscheren typischen mehrstufigen Schneidvorgang fortzusetzen und hierfür die Handhebel wieder in Öffnungsrichtung zu bewegen oder den als Ratschenschnitt begonnenen Schneidvorgang als Direktschnitt ohne Bewegungsumkehr der Handhebel fortzuführen.

Der Benutzer kann daher situationsabhängig während des Schneidvorgangs entscheiden, ob er den anfänglichen Schneidvorgang ohne Ausnutzung der weiteren Ratschenstellungen als einfachen Direktschnitt durchführen oder die Ratschenfunktion ausnützen will. Der Benutzer kann die Entscheidung dabei spontan anhand des in dem anfänglichen Schneidvorgang geführten Widerstands des Schnittguts treffen, ohne sich bereits vor dem Schneidvorgang festzulegen. Insbesondere braucht der Benutzer kein gesondertes Betätigungselement betätigen, welches eine Umschaltung zwischen zwei Kraftübertragungsmechanismen bewirkt.

In bevorzugter Ausführung der Erfindung wird aufbauend auf dem bekannten und hinsichtlich der möglichen Kraftreduzierung bewährten Ratschenmechanismus durch den nach einem anfänglichen Schließvorgang eintretenden Anschlag der Anschlagfläche an die Gegenanlagefläche mit der Lösbarkeit des Ratscheneingriffs durch Fortführung des Schließvorgangs der Handhebel die Möglichkeit gegeben, den Schneidvorgang ohne vorheriges Öffnen der Handhebel als ununterbrochenen Schneidvorgang bis zu einer der nächsten Ratschenstellungen oder vorzugsweise als Direktschnitt bis zum vollständigen Schließen der Scherenbacke und Durchtrennen des Schnittguts fortzusetzen. Bei einer solchen Fortsetzung des Schneidvorgangs ohne vorheriges teilweises Öffnen der Handhebel wird ein Kraftaufwand vergleichbar dem einer Gartenschere ohne Ratschenmechanismus erforderlich.

Der anfängliche Schneidvorgang kann durch den dabei nach dem vollständigen Öffnen der Handhebel immer in die erste Raststufe eingerückten Ratschenhebel mit relativ geringer Kraft durchgeführt werden. Bei Anlage der Anlagefläche an die Gegenanlagefläche steigt der sich dem Benutzer darbietende Kraftwiderstand sprunghaft an. Wenn dem Benutzer der Kraftaufwand für die Fortsetzung des Schließvorgangs dabei doch zu hoch erscheint, kann er ohne sonstiges Erfordernis direkt in den Ratschen-Schneidmodus übergehen, indem er die Handhebel wieder teilweise öffnet, bis der Ratschenhebel zu einer weiteren Ratschenstufe vorrückt.

Vorteilhafterweise kann eine der beiden Flächen aus Anschlagfläche und Gegenanschlagfläche eine konvexe Wölbung und die andere Fläche eine im Vergleich dazu schwächer gekrümmte konkave Wölbung aufweisen, wodurch an der quasi punktuellen Berührung der beiden Flächen die sogenannte Hertz'sche Pressung gering gehalten werden kann.

Die Oberfläche wenigstens einer der beiden aneinander anliegenden Flächen kann reibungsmindernd bearbeitet, insbesondere mit einer reibungsmindernden Beschichtung oder Abdeckung versehen sein. Die Geometrien von Anschlagfläche und Gegenanschlagfläche können so gestaltet sein, das die zwischen den beiden Flächen übertragene Kraft die relative Verlagerung der beiden aneinander anliegenden Flächen bei dem fortschreitenden Schließvorgang begünstigt.

Von besonderem Vorteil ist es, die Relativbewegung zwischen Anlagefläche und Gegenanlagefläche, welche bei der Fortsetzung des Schneidvorgangs der Handhebel im Direktschnitt-Modus an sich verlagernder Position aneinander anliegen, als Wälzen einer Fläche auf einer anderen auszugestalten. Hierfür ist die Anschlagfläche vorteilhafterweise an einem zumindest begrenzt drehbaren mechanischen Element ausgebildet ist. Vorteilhafterweise ist die Anschlagfläche von dem Drehpunkt weg konvex gewölbt und vorzugsweise als Umfangsfläche einer drehbar gelagerten Rolle ausgeführt. Die Gegenanschlagfläche ist dann vorteilhafterweise von der Anschlagfläche weg konkav gekrümmt ausgeführt, wodurch vorteilhafterweise an dem Berührungspunkt von Anschlagfläche und Gegenanschlagfläche die Hertz'sche Pressung niedrig gehalten werden kann.

Die Anlagefläche kann an dem Hebelfortsatz und die Gegenanlagefläche an dem zweiten Handhebel angeordnet sein oder umgekehrt. Die Raststruktur kann an dem Hebelfortsatz oder an dem zweiten Handhebel angeordnet sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine anfänglich weit geöffnete Schere,
- Fig. 2: die Schere am Ende des anfänglichen Schließvorgangs,
- Fig. 3: die Schere in einem weiter fortgeschrittenen Schneidstadium.

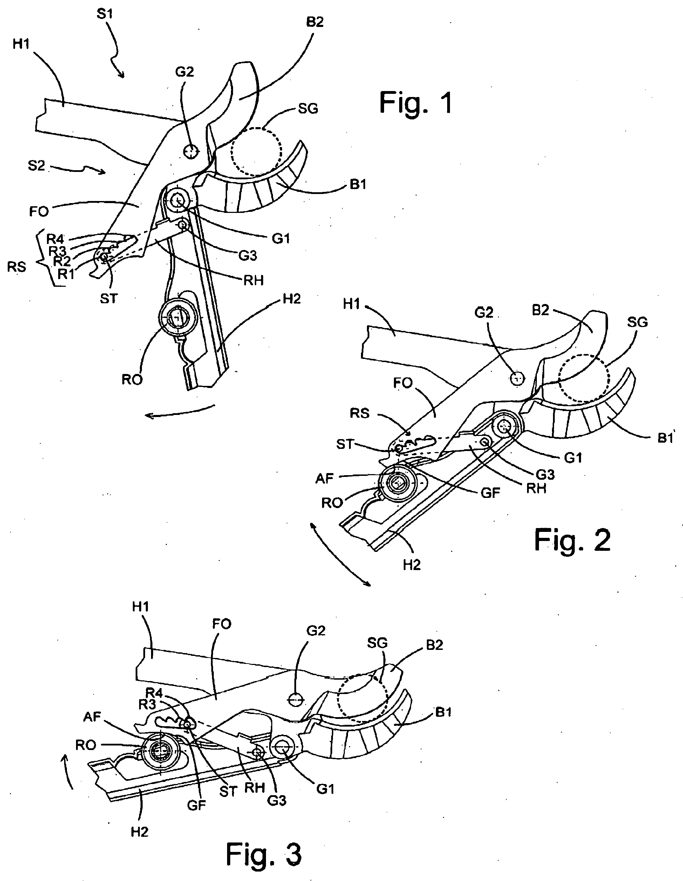

Fig. 1 zeigt in Seitenansicht, d. h. mit Blickrichtung in Achsrichtung der Gelenke des Scherengewerbes eine Schere in einer anfänglichen Öffnungsstellung. Die Schere enthalte einen ersten Scherenhebel S1, welcher einen ersten Handgriff H1 und eine erste Scherenbacke B1 enthalte. Die erste Scherenbacke B1 kann insbesondere auch als Amboß einer Amboßschere ausgeführt sein. An dem ersten Scherenhebel ist eine erste Gelenkposition G1 und eine zweite Gelenkposition G2 vorgegeben.

Ein zweiter Handhebel H2 ist in einem ersten Gelenk an der Gelenkposition G1 mit dem ersten Scherenhebel verbunden. Ein zweiter Scherenhebel S2 ist an der Gelenkposition G2 in einem zweiten Gelenk mit dem ersten Scherenhebel verbunden. Der zweite Scherenhebel enthält eine zweite Scherenbacke B2 und bezüglich des zweiten Gelenks G2 dieser abgewandt einen Hebelfortsatz FO. In einem dritten Gelenk G3 ist ein Ratschenhebel RH mit einem ersten Ende gelenkig mit dem zweiten Handhebel H2 verbunden. Am entgegen gesetzten zweiten Ende des Ratschenhebels RH ist der Ratschenhebel über ein Eingriffselement, beispielsweise einem Stift, an einer Raststruktur RS abgestützt, welche mehrere Raststufen R1, R2, R3, R4 aufweist. Die Raststruktur ist in gebräuchlicher Ausführung als Durchbruch durch eine den zweiten Scherenhebel bildende Platte ausgeführt. Der Ratschenhebel ist durch eine nicht mit eingezeichnete Feder, welche beispielsweise eine Zugfeder zu dem ersten Handhebel H1 oder eine an dem zweiten Handhebel H2 abgestützte Schenkelfeder sein kann, in Richtung der Raststufen der Raststruktur, in Fig. 1 also im Uhrzeigersinn gedrückt.

In der in Fig. 1 dargestellten Position der Schere mit weit geöffnetem Scherenmaul zwischen den Scherenbacken B1 und B2 liegt der Stift ST als Eingriffselement des Ratschenhebels in der ersten Raststufe R1 der Raststruktur ein. Für die Kraftübertragung einer die beiden Handhebel H1 und H2 aufeinander zu bewegenden Benutzerkraft in eine Schneidkraft auf ein Schnittgut SG zwischen den Scherenbacken B1 und B2 ist die Geometrie des Vierecks aus erstem Gelenk G1, zweitem Gelenk G2, Stift ST und drittem Gelenk G3 maßgeblich. Über die Geometrie der Seitenlängen dieses Vierecks kann das Maß der Kraftübertragung beeinflusst werden. Bei in einer anderen Raststufe einliegendem Stift ST ist die Geometrie des Vierecks und somit das Maß der Kraftübertragung verändert.

Wenn die Handhebel H1 und H2 durch eine Benutzerkraft aufeinander zu bewegt werden, wird insbesondere eine auf den zweiten Handhebel H2 wirkende Benutzerkraft über den dabei auf Druck belasteten Ratschenhebel RH in die erste Rastnut der Raststruktur übertragen und in ein Drehmoment des zweiten Scherenhebels um das zweite Gelenk G2 umgesetzt. Dabei stützt sich das Schnittgut SG an der als Scherenamboss angenommenen ersten Scherenbacke B1 ab und die geschliffene zweite Scherenbacke B2 schneidet in das Schnittgut ein. Der Schließvorgang kann bei Kraftübertragung über den Ratschenhebel RH in die erste Rastnut fortgesetzt werden bis zu der in Fig. 2 dargestellten Position, in welcher die zweite Scherenbacke B2 in das Schnittgut SG eingedrungen ist und dieses aber erst teilweise durchtrennt hat. Der Hebelfortsatz FO liegt in dieser Stellung der Schere mit einer Gegenanlagefläche GF an einer Anschlagfläche AF an, welche durch die Umfangsfläche einer am zweiten Handhebel H2 drehbar gelagerten Rolle RO gegeben ist.

Typischerweise wird bei bekannten Ratschenscheren solcher Bauart beim Anlegen einer Gegenanschlagfläche des Hebelfortsatzes FO an einer Anschlagfläche des zweiten Handhebels H2 die Schließbewegung der aufeinander zu bewegten Handhebel H 1, H2 umgekehrt und die Handhebel werden wieder, was als Öffnen oder Öffnungsrichtung der Handhebel bezeichnet sei, voneinander weg geschwenkt. Wenn bei an dem Schnittgut angelegt bleibender erster Scherenbacke B1 der zweite Handhebel aus der in Fig. 2 skizzierten Stellung wieder von dem ersten Handhebel weg verschwenkt wird, bleibt der zweite Scherenhebel S2 aufgrund der bereits in das Schnittgut eingedrungenen zweiten Scherenbacke stehen und das zweite Ende des Ratschenhebels RH mit dem Stift ST rückt innerhalb der Raststruktur weiter zu der nächsten oder allgemein zu einer der nächsten Rastnuten und greift unter der Einwirkung der Federkraft, welche auf den Ratschenhebel im Uhrzeigersinn drehend wirkt, in eine dem zweiten Gelenk G2 näher liegende Rastnut ein.

Bei erneuter Bewegung der beiden Handhebel aufeinander zu unter der Einwirkung einer Benutzerkraft stützt sich der Ratschenhebel nunmehr an einer näher beim zweiten Gelenk G2 liegenden Rastnut ab und die zweite Scherenbacke dringt weiter in das Schneidgut ein, bis der Hebelfortsatz FO mit der Gegenanlagefläche GF erneut an der Anlagefläche AF der Rolle RO anliegt oder bis das Schnittgut SG ganz durchtrennt ist, was bei Abstützung des Ratschenhebels über den Stift ST in der dem zweiten Gelenk G2 am nächsten liegenden Rastnut immer gegeben ist.

Bei der Erfindung ist nun vorgesehen, dass ausgehend von der Situation nach Fig. 2 die Bewegungsrichtung der Handhebel nicht in Öffnungsrichtung umgekehrt wird, sondern dass der die beiden Handhebel H1, H2 aufeinander zu bewegende Schließvorgang der Handhebel in gleichem Bewegungssinne fortgesetzt wird. Eine Kraftübertragung von dem zweiten Handhebel auf den Hebelfortsatz FO erfolgt dabei nicht mehr über den Ratschenhebel RH zwischen dem dritten Gelenk G3 und der Raststruktur, sondern über die Lagerung der Rolle RO, deren Anlagefläche AF und die Gegenanlagefläche GF an dem Hebelfortsatz FO. Aufgrund dieses Kraftübertragungswegs ist für die Fortsetzung des Schließvorgangs der Handhebel und damit verbunden auch für die Fortsetzung der Schließbewegung des Scherenmauls zwischen den beiden Scherenbacken eine andere Kraftübertragungsgeometrie gegeben, welche im wesentlichen der Kraftübertragung bei einer Gartenschere ohne Ratschenmechanismus entspricht. Die vom Benutzer auf die Handhebel H1, H2 auszuübende Kraft steigt damit sprunghaft an. Wenn der Benutzer die nun erforderliche höhere Kraft, welche der bei Gartenscheren ohne Ratschenmechanismus erforderlichen Kraft im wesentlichen gleich anzunehmen ist, aufbringt, werden zweiter Handhebel H2 und Hebelfortsatz FO des zweiten Scherenhebels im wesentlichen gleichförmig zueinander auf den ersten Handhebel zu verschwenkt und das Scherenmaul bis zum Durchtrennen des Schnittguts vollständig geschlossen. Dabei wandert der Stift ST des Ratschenhebels RH innerhalb der Ratschenstruktur entlang der mehreren Rastnuten, ohne aber eine Funktion innerhalb des Ratschenmechanismus zu erfüllen und insbesondere ohne die Benutzerkraft auf die Scherenhebel zu übertragen.

Fig. 3 zeigt die Schere in einem weiter fortgeschrittenen Schließzustand, wobei der Stift den die vorletzte Raststufe R3 von der letzten Raststufe R4 trennenden Zahn überstreicht.

Wenn der Benutzer in der Situation nach Fig. 2 den Schließvorgang als Direktschnitt fortsetzen will, aber feststellt, dass er die dafür erforderliche Kraft nicht aufbringen kann, kann er ohne Betätigung irgendeines mechanischen Elements einfach in der für den Ratschenmechanismus üblichen Vorgehensweise die beiden Handhebel wieder voneinander weg verschwenken, bis der Stift ST des Ratschenhebels in eine der nächsten Rastnuten eingreift und dann mit einer gegenüber dem Direktschnitt geringeren Kraft den Schneidvorgarig fortsetzen, gegebenenfalls auch in mehreren weiteren Stufen. Der Benutzer kann auch anfänglich mehr als eine stufe des mehrstufigen Ratschenschneidvorgangs mit einer Öffnungsbewegung zwischen zwei Schließbewegungen als Ratschenschnitt durchführen und erst dann in einen Direktschnitt übergehen.

Wie an sich von Ratschenscheren bekannt, kann die Raststruktur auch auf Seiten des zweiten Handhebels ausgebildet und der Rasthebel in fester Position in einem dritten Gelenk an dem Hebelfortsatz FO angelenkt sein, und mit einem Eingriffselement, wie beispielsweise dem Stift ST in die Raststruktur am Handhebel H2 eingreifen.

Anschlagfläche AF und Gegenanlagefläche GF können auch in der Weise vertauscht sein, dass die Anschlagfläche an dem Hebelfortsatz FO und die Gegenanschlagfläche GF auf Seiten des Handhebels ausgebildet sind, wofür die Rolle RO oder ein anderes zumindest begrenzt drehbares, die Anschlagfläche AF tragendes Element drehbar an dem Hebelfortsatz FO befestigt ist.

Die Anschlagfläche, welche sich auf der Gegenanschlagfläche bei der Fortsetzung des Schneidvorgangs als Direktschnitt abwälzt, kann auch nur über einen begrenzten Winkelbereich um den Drehpunkt eines drehbaren Anschlagelements ausgebildet sein und kann auch von der Form eines exakten Kreisbogens um den Drehpunkt abweichen. Ein begrenzt drehbares Anschlagelement ist vorteilhafterweise federbelastet in eine definierte Ausgangsstellung gedrückt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Handbetätigte Gartenschere mit einem Rastmechanismus, welcher einen Schneidvorgang als Schließvorgang zweier anfänglich geöffneter Scherenbacken (B1, B2) durch Bewegung zweier Handhebel (H1, H2) in mehreren Schritten mit alternierender Schließbewegung und Öffnungsbewegung der Handhebel (H1, H2) ermöglich,
**dadurch gekennzeichnet, dass** Mitteln zur alternativen Durchführung eines vollständigen Schneidvorgangs mit nur einer Schließbewegung, der Handhebel (H1, H2) als Direktschnitt vorgesehen sind,
dass ausgehend von einer Öffnungsstellung der Handhebel (H1, H2) in einem ersten anfänglichen Schneidvorgang eine Kraftübertragung von den Handhebeln (H1, H2) auf die Scherenbacken (B1, B2) in einer anfänglichen Ratschenstellung über den Ratschenmechanismus (RH, RS) erfolgt und dass bei Erreichen des Endes der anfänglichen Ratschenstellung zugeordneten Schließbewegung der Handhebel (H1, H2) sowohl die Mittel (FO, AF, GF) zur Durchführung eines Direktschnitts selbsttätig wirksam werden und eine Fortsetzung der Schließbewegung der Handhebel (H1, H2) für eine Fortsetzung des Schneidvorgangs als Direktschnitt zulassen als auch eine Fortsetzung des Schneidvorgangs nach einer Öffnungsbewegung der Handhebel (H1, H2) bei erneuter Schließbewegung über eine der nächsten Ratschenstufen möglich ist.

2. Schere nach Anspruch 1, **dadurch gekennzeichnet, dass** aus jeder Raststufe (R1, R2, R3, R4) ein Direktschnitt bis zum vollständigen Schließen der Scherenbacken (B1, B2) in einer durchgehenden Schließbewegung der Handhebel (H1, H2) möglich ist.

3. Schere nach Anspruch 1 oder 2, wobei
- an einem ersten Scherenhebel (S1) eine erste Scherenbacke (B1) und ein erster Handhebel (H1) ausgebildet sind,
- ein zweiter Handhebel (H2) in einem ersten Gelenk (G1) mit dem ersten Scherenhebel (S1) verbunden ist,
- ein zweiter Scherenhebel (S2) in einem zweiten Gelenk (G2) mit dem ersten Scherenhebel (S1) verbunden ist,
- an dem zweiten Scherenhebel (S2) eine zweite Scherenbacke (B2) und dieser bezüglich des zweiten Gelenks (G2) abgewandt ein zwischen erstem und zweitem Handhebel (H1, H2) liegender Hebelfortsatz (FO) ausgebildet sind,
- der Hebelfortsatz (FO) und der zweite Handhebel (H2) über einen Ratschenhebel (RH) verbunden sind,
- der Ratschenhebel (RH) mit einem ersten Ende in einem dritten Gelenk (G3) und mit einem zweiten Ende in einer mehrstufigen Raststruktur (RS) mit dem zweiten Handhebel (H2) bzw. dem Hebelfortsatz (FO) verbunden ist und federbelastet zwischen verschiedenen Raststellungen mit Eingriff in unterschiedliche Raststufen (R1, R2, R3, R4) der Raststruktur (RS) um das dritte Gelenk (G3) verlagerbar ist,
- verschiedene Raststufen (R1, R2, R3, R4) unterschiedlichen maximalen und minimalen Öffnungsweiten von Handhebeln (H1, H2) und Scherenbacken (B1, B2) zugeordnet sind,
- bei maximaler Öffnungsweite der Handhebel (H1, H2) der Ratschenhebel (RH) in der Raststruktur (RS) in einer ersten Raststufe (R1) einliegt, in welcher die Scherenbacken (B1, B2) nicht vollständig schließbar sind,
- bei in der ersten Raststufe (R1) einliegendem Ratschenhebel (RH) ein Schließen der Handhebel (H1, H2) eine Anlage einer Anlagefläche (AF) des Hebelfortsatzes (FO) an eine Gegenanlagefläche am zweiten Handhebel (H2) bewirkt,
- eine unter Benutzerkraft fortgesetzte Schließbewegung der Handhebel (H1, H2) das Lösen des zweiten Endes des Ratschenhebels (RH) aus der zuvor eingenommenen Raststufe (R1, R2, R3, R4) auslöst,
- bei der fortgesetzten Schließbewegung der Handhebel (H1, H2) die Anlagefläche (AF) und Gegenanlagefläche (GF) die Benutzerkraft auf den zweiten Scherenhebel (H2) übertragen.

4. Schere nach Anspruch 3, **dadurch gekennzeichnet, dass** die Anlagefläche (AF) konvex gekrümmt verläuft.

5. Schere nach Anspruch 4, **dadurch gekennzeichnet, dass** die Gegenanlagefläche (GF) konkav gekrümmt verläuft.

6. Schere nach einem der Ansprüche 3 bis 5, **dadurch gekennzeichnet, dass** die Anlagefläche (AF) an einem zumindest begrenzt drehbaren Anlageelement ausgebildet ist.

7. Schere nach Anspruch 6, **dadurch gekennzeichnet, dass** die Anlagefläche (AF) eine Umfangsfläche einer drehbar gelagerten Rolle (RO) ist.

8. Schere nach einem der Ansprüche 3 bis 7, **dadurch gekennzeichnet, dass** Anlagefläche (AF) und/oder Gegenanlagefläche (GF) mit einer Oberflächenbeschichtung versehen sind.

## Claims

1. Manually operated garden shears having a latching mechanism which permits a cutting process as a closing process of two initially open jaws (B1, B2) of the shears by moving two hand levers (H1, H2) in several steps with alternating closing movement and opening movement of the hand levers (H1, H2), **characterized in that** means for alternately carrying out a complete cutting process with only a closing movement of the hand levers (H1, H2) as a direct cutting action are provided, **in that**, starting from an opening position of the hand levers (H1, H2), in a first initial cutting process, force is transmitted from the hand levers (H1, H2) to the jaws (B1, B2) of the shears in an initial ratcheting position by means of the ratcheting mechanism (RH, RS), and **in that**, when the end of the closing movement of the hand levers (H1, H2) is reached, which closing movement is associated with the initial ratcheting position, both the means (FO, AF, GF) for carrying out a direct cutting action automatically become operative and permit a continuation of the closing movement of the hand levers (H1, H2) for a continuation of the cutting process as a direct cutting action and a continuation of the cutting process after an opening movement of the hand levers (H1, H2) in the event of renewed closing movement is possible by means of one of the next ratcheting stages.

2. Shears according to Claim 1, **characterized in that** a direct cutting action until complete closing of the jaws (B1, B2) of the shears in a continuous closing movement of the hand levers (H1, H2) is possible from each latching stage (R1, R2, R3, R4).

3. Shears according to Claim 1 or 2, wherein
- a first jaw (B1) of the shears and a first hand lever (H1) are formed on a first lever (S1) of the shears,
- a second hand lever (H2) is connected to the first lever (S1) of the shears in a first articulation (G1),
- a second lever (S2) of the shears is connected to the first lever (S1) of the shears in a second articulation (G2),
- a second jaw (B2) of the shears and, in a manner averted from the said second jaw of the shears with respect to the second articulation (G2), a lever projection (FO), which is situated between the first and second hand levers (H1, H2), are formed on the second lever (S2) of the shears,
- the lever projection (FO) and the second hand lever (H2) are connected by means of a ratcheting lever (RH),
- the ratcheting lever (RH) is connected to the second hand lever (H2) and to the lever projection (FO) by way of a first end in a third articulation (G3) and, respectively, by way of a second end in a multistage latching structure (RS) and can be displaced in a spring-loaded manner between different latching positions with engagement in different latching stages (R1, R2, R3, R4) of the latching structure (RS) about the third articulation (G3),
- different latching stages (R1, R2, R3, R4) are associated with different maximum and minimum opening widths of hand levers (H1, H2) and jaws (B1, B2) of the shears,
- at the maximum opening width of the hand levers (H1, H2), the ratcheting lever (RH) is situated in the latching structure (RS) in a first latching stage (R1) in which the jaws (B1, B2) of the shears cannot be completely closed,
- when the ratcheting lever (RH) is situated in the first latching stage (R1), closing of the hand levers (H1, H2) causes a bearing surface (AF) of the lever projection (FO) to bear against a mating bearing surface on the second hand lever (H2),
- a closing movement, which is continued under user force, of the hand levers (H1, H2) triggers release of the second end of the ratcheting lever (RH) from the previously assumed latching stage (R1, R2, R3, R4),
- during the continued closing movement of the hand levers (H1, H2), the bearing surface (AF) and the mating bearing surface (GF) transmit the user force to the second lever (H2) of the shears.

4. Shears according to Claim 3, **characterized in that** the bearing surface (AF) runs in a convexly curved manner.

5. Shears according to Claim 4, **characterized in that** the mating bearing surface (GF) runs in a concavely curved manner.

6. Shears according to one of Claims 3 to 5, **characterized in that** the bearing surface (AF) is formed on a bearing element which can be rotated at least to a limited extent.

7. Shears according to Claim 6, **characterized in that** the bearing surface (AF) is a circumferential surface of a rotatably mounted roller (RO).

8. Shears according to one of Claims 3 to 7, **characterized in that** the bearing surface (AF) and/or the mating bearing surface (GF) are provided with a surface coating.

## Revendications

1. Sécateur actionné manuellement avec un mécanisme d'encliquetage, qui permet une opération de coupe comme opération de fermeture de deux mâchoires de coupe (B1, B2) initialement ouvertes, par déplacement de deux poignées (H1, H2) en plusieurs étapes avec en alternance un mouvement de fermeture et un mouvement d'ouverture des poignées (H1, H2), **caractérisé en ce qu'**il est prévu des moyens pour l'exécution alternative d'une opération de coupe complète avec seulement un mouvement de fermeture des poignées (H1, H2) comme coupe directe, **en ce qu'**à partir d'une position d'ouverture des poignées (H1, H2), il se produit dans une première opération de coupe initiale une transmission de force des poignées (H1, H2) aux mâchoires de coupe (B1, B2) dans une position initiale du rochet via le mécanisme à cliquet (RH, RS) et **en ce que**, lorsque l'on atteint l'extrémité du mouvement de fermeture des poignées (H1, H2) associé à la position initiale du rochet, d'une part les moyens (FO, AF, GF) pour l'exécution d'une coupe directe deviennent automatiquement actifs et permettent une poursuite du mouvement de fermeture des poignées (H1, H2) pour une poursuite de l'opération de coupe comme coupe directe et d'autre part aussi une poursuite de l'opération de coupe après un mouvement d'ouverture des poignées (H1, H2) est possible lors d'un nouveau mouvement de fermeture via un des crans suivants du rochet.

2. Sécateur selon la revendication 1, **caractérisé en ce qu'**une coupe directe jusqu'à la fermeture complète des mâchoires de coupe (B1, B2) en un mouvement de fermeture continu des poignées (H1, H2) est possible à partir de chaque cran d'encliquetage (R1, R2, R3, R4).

3. Sécateur selon la revendication 1 ou 2, dans lequel
- une première mâchoire de coupe (B1) et une première poignée (H1) sont formées sur un premier manche de sécateur (S1),
- une deuxième poignée (H2) est assemblée au premier manche de sécateur (S1) avec une première articulation (G1),
- un deuxième manche de sécateur (S2) est assemblé au premier manche de sécateur (S1) avec une deuxième articulation (G2),
- une deuxième mâchoire de coupe (B2) et un prolongement de levier (FO) situé entre la première et la deuxième poignées (H1, H2) à l'opposé de celle-ci par rapport à la deuxième articulation (G2) sont formés sur le deuxième manche de sécateur (S2),
- le prolongement de levier (FO) et la deuxième poignée (H2) sont reliés par un levier d'encliquetage (RH),
- le levier d'encliquetage (RH) est assemblé par une première extrémité avec une troisième articulation (G3) et par une deuxième extrémité avec une structure d'encliquetage à plusieurs crans (RS) à la deuxième poignée (H2) ou au prolongement de levier (FO) et est déplaçable par ressort autour de la troisième articulation (G3) entre différentes positions d'encliquetage avec engagement dans différents crans d'encliquetage (R1, R2, R3, R4) de la structure d'encliquetage (RS),
- différents crans d'encliquetage (R1, R2, R3, R4) sont associés à différentes largeurs d'ouverture maximales et minimales de poignées (H1, H2) et de mâchoires de coupe (B1, B2),
- à la largeur d'ouverture maximale des poignées (H1, H2), le levier d'encliquetage (RH) est engagé dans la structure d'encliquetage (RS) dans un premier cran d'encliquetage (R1), dans lequel les mâchoires de coupe (B1, B2) ne peuvent pas être complètement fermées,
- lorsque le levier d'encliquetage (RH) est engagé dans le premier cran d'encliquetage (R1), une fermeture des poignées (H1, H2) provoque un appui d'une face d'appui (AF) du prolongement de levier (FO) sur une face d'appui opposée sur la deuxième poignée (H2),
- un mouvement de fermeture des poignées (H1, H2) poursuivi sous la force de l'utilisateur déclenche une séparation de la deuxième extrémité du levier d'encliquetage (RH) hors du cran d'encliquetage occupé précédemment (R1, R2, R3, R4),
- lors de la poursuite du mouvement de fermeture des poignées (H1, H2), la face d'appui (AF) et la face d'appui opposée (GF) transmettent la force de l'utilisateur au deuxième manche de sécateur (H2).

4. Sécateur selon la revendication 3, **caractérisé en ce que** la face d'appui (AF) présente une courbure convexe.

5. Sécateur selon la revendication 4, **caractérisé en ce que** la face d'appui opposée (GF) présente une courbure concave.

6. Sécateur selon l'une quelconque des revendications 3 à 5, **caractérisé en ce que** la face d'appui (AF) est formée sur un élément d'appui pouvant tourner au moins de façon limitée.

7. Sécateur selon la revendication 6, **caractérisé en ce que** la face d'appui (AF) est une face périphérique d'un galet monté de façon rotative (RO).

8. Sécateur selon l'une quelconque des revendications 3 à 7, **caractérisé en ce que** la face d'appui (AF) et/ou la face d'appui opposée (GF) sont munies d'un revêtement de surface.
